# EUROPEAN PATENT APPLICATION

(11) **EP 1 933 518 A1**
(43) Date of publication of application: **18.06.2008**
(21) Application number: 06775281.6
(22) Date of filing: 03.08.2006
(51) Int. Cl.: H04L 29/02

(54) **A METHOD FOR OPTIMIZING THE COMMUNICATION BETWEEN MOBILE NODES**

(30) Priority: 09.09.2005 CN 200510098386
(71) Applicant: Huawei Technologies Co., Ltd., Longgang District Shenzhen 518129 (CN)
(72) Inventor: PAN, Haotao, 518129 Shenzhen Guangdong (CN); GUAN, Hongguang, 518129 Shenzhen Guangdong (CN); WANG, Jianbing, 518129 Shenzhen Guangdong (CN); HOU, Chao, 518129 Shenzhen Guangdong (CN); WANG, Chuntao, 518129 Shenzhen Guangdong (CN); LI, Jianjun, 518129 Shenzhen Guangdong (CN)
(74) Representative: Thun, Clemens
(86) International application number: PCT/CN2006/001958
(87) International publication number: WO 2007/028311

(57) **Abstract**

A method for optimizing communication between mobile nodes (MNs) in a mobile IP network includes: an MN in a mobile IP network sends data packets destined to another MN to its foreign agent device; the foreign agent device receives the data packets, determines that the destination MN is attached to the foreign agent device, and forwards the data packets to the destination MN. The method may help reduce the delay in communication between MNs and relieve the load of network devices.

## Description

### Field of the Invention

The present invention relates to network communication, and particularly, to a method for optimizing communication between mobile nodes in a mobile Internet Protocol (IP) based network.

### Background of the Invention

The mobile IP technology is a technical solution that provides mobility for users on the Internet. Mobile IP goes beyond the geographical restrictions and shows the features of high scalability, reliability and security. It extends the mobility and roaming capability, enabling a node to hold up ongoing communication in the progress of a handover.

In a mobile IP network, a mobile node (MN) can be connected to any link by using a permanent IP address. While providing terminals with a large range of mobility, mobile IP also ensures the assignability and reachability of terminal IP addresses. A mobile IP network mainly includes MNs, foreign agents (FAs), home agents (HAs) and communication nodes (CNs).

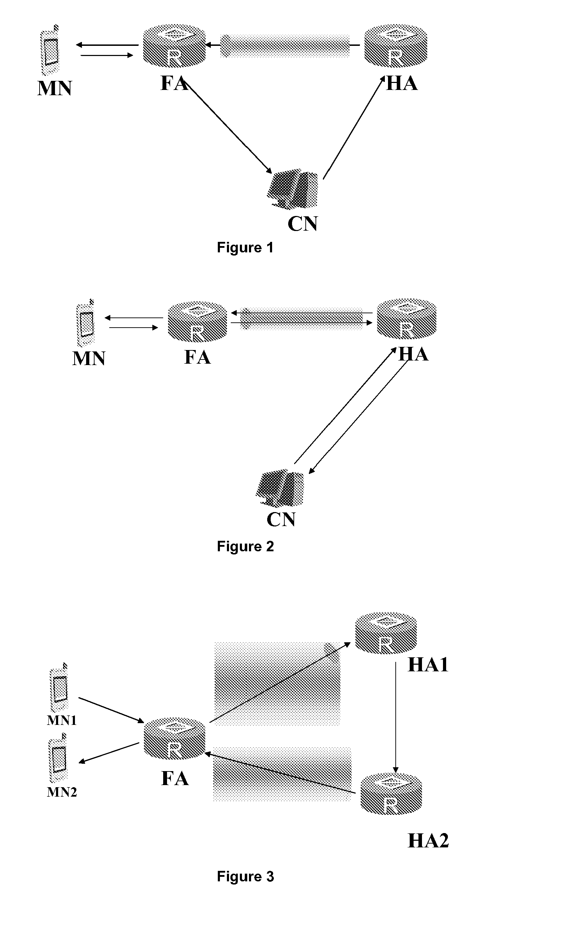

In a mobile IP network, data packets are transmitted between an MN and a CN in accordance with RFC3344, as shown in Figure 1. The detailed procedure is as follows:

When the MN moves to a foreign network, data packets sent by the CN to the MN are first routed to the HA of the MN, then to the FA of the MN via a tunnel, and finally to the MN.

Normally, packets sent by the MN to the CN are first routed to the FA of the MN and then directly sent to the CN by the FA. ln special scenarios, for instance, during multicast or when a firewall filters packets by source addresses, packets sent by the MN are sent to the HA of the MN via a reverse tunnel assigned to the MN and then routed to the CN. The specific procedure is defined in RFC3024. The routing procedure on a reverse tunnel in the mobile IP network is shown in Figure 2.

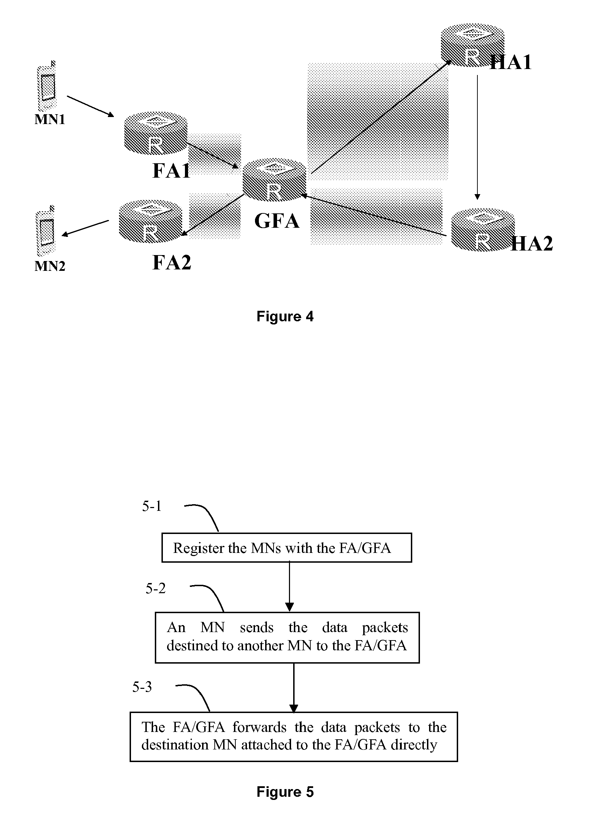

In a mobile IP network, two MNs may be attached to one FA, as shown in Figure 3. In addition, to optimize the re-registration due to MN handover, hierarchical FA networking may be adopted so that the FAs of several MNs are attached to one gateway FA (GFA). This networking is shown in Figure 4. In the mobile IP network shown in Figure 3 or Figure 4, for communication between two MNs attached to one FA/GFA, if one or both of the MNs have been assigned a reverse tunnel, when the MN requesting the reverse tunnel (an MN1) sends data packets to the other MN (an MN2), the data packets are routed in the following procedure:

The data packets sent by the MN1 to the MN2 are first routed to the FA/GFA and then forwarded to the HA of the MN1 (an HA1) via the reverse tunnel assigned to the MN1. After HA1 resolves the data packets, it routes the packets to the HA of the MN2 (an HA2). The HA2 then routes the data packets to the FA/GFA via a tunnel. The FA/GFA resolves the data packets from the tunnel and forwards the data packets to the MN2.

The weakness of the above packet routing procedure is as follows:

Because a reverse tunnel exists, for a communication session between two MNs attached to one FA/GFA, packets exchanged between the two MNs need to detour to their home agents for routing. In the process, data packets have to go through two tunnels. This causes a delay in the communication and increases loads of the FA/GFA.

### Summary of the Invention

The present invention provides a method for optimizing the communication between MNs in a mobile IP network, to reduce the delay in inter-MN communication and reduce the load of network devices.

The technical solution is as follows:

A method for optimizing communication between MNs in a mobile IP network includes:

A: sending, by an MN in the mobile IP network, the data packets destined to another MN to its foreign agent device and

B: by the foreign agent device, receiving the data packets, determining that the destination MN is attached to the foreign agent device, and routing the packets directly to the destination MN.

After an MN registers with its foreign agent device, the foreign agent device can store the attribute information of the MN.

Preferably, the attribute information of the MN is stored in the internal visitor list of the foreign agent device.

Preferably, the attribute information of the MN includes whether the MN has been assigned a reverse tunnel or further includes the IP address of the MN.

Preferably, in step B, the foreign agent device receives the data packets, determines that the sending MN has been assigned a reverse tunnel according to the MN attribute information stored in the foreign agent device, and goes on to determine that the destination MN is attached to the foreign agent device.

Preferably, the foreign agent device queries its routing table or visitor list to determine whether the destination MN is attached to the foreign agent device

The foreign agent deviceis an FA or a GFA.

If the foreign agent devicein step A is an FA, step B includes:

B1: by the FA, querying the MN attribute information it stores, determining that the source MN has a reverse tunnel according to the source IP address of the data packets, determining whether the destination MN is locally attached and if so, proceeding with step B2, or else step B3;

B2: routing, by the FA, the data packets to the destination MN attached to the FA; and

B3: routing, by the FA, the data packets to a GFA, and by the GFA, sending the data packets to the destination MN attached to the GFA after determining that the destination MN is locally attached.

Preferably, step B3 includes:

B31: by the FA, encapsulating the received packets into tunnel data packets and sending the tunnel data packets to the GFA, and by the GFA, decapsulating the tunnel data packets to data packets;

B32: by the GFA, querying the MN attribute information it stores, determining that the source MN has a reverse tunnel according to the source IP address of the decapsulated data packets, determining that the destination MN is locally attached, and proceeding with step B33; and

B33: by the GFA, querying its routing table, encapsulating the decapsulated data packets into tunnel data packets, and sending the tunnel data packets to the FA of the destination MN attached to the GFA; by the FA, decapsulating the received tunnel data packets to data packets and sending the data packets to the destination MN.

The mobile lP network is an IPv4 or IPv6 network.

In the above technical solution, data packets exchanged between two MNs attached to one FA/GFA are directly forwarded by the FA/GFA. This optimizes the communication between two MNs under a same FA/GFA, reducing the delay in communication between MNs and relieving the load of network devices like FA/HA.

### Brief Description of the Drawings

Figure 1 shows a procedure for routing data packets between a MN and a CN in a mobile IP network;

Figure 2 shows a routing procedure on a reverse tunnel in the mobile IP network;

Figure 3 shows a networking diagram where two MNs are attached to one FA;

Figure 4 shows a networking diagram where two MNs are attached to one GFA;

Figure 5 shows a processing procedure of the method according to an embodiment of the invention;

Figure 6 shows optimization of routing with a reverse tunnel for MNs under the same FA according to an embodiment of the invention; and

Figure 7 shows optimization of routing with a reverse tunnel for MNs under the same GFA according to an embodiment of the invention.

### Detailed Description of the Embodiments

For a better understanding of the purpose, technical solution and benefits of the present invention, the embodiments of the invention are detailed with reference to the accompanying drawings.

An embodiment of the invention provides a method for optimizing the communication between MNs in a mobile IP network. The core idea is: the FA/GFA forwards data packets exchanged between two MNs attached to the FA/GFA without detouring them to the home agents of the MNs.

As shown in Figure 5, the method includes:

Step 5-1: Register the MNs with the FA/GFA.

According to an embodiment of the invention, the MNs should first register with the FA/GFA. The registration procedure complies with RFC3344/draft-ietf-mip4-reg-tunnel-00. The MNs to register with the FA/GFA fall into two categories: those requiring a reverse tunnel and those requiring normal routing.

After the registration, if an FA hierarchy is not adopted, the FA stores the attribute information of the MNs. The attribute information includes the IP address and whether the MN has a reverse channel. If a FA hierarchy is adopted, the attribute information may be stored in both the FA and the GFA, or stored in the GFA only.

The FA/GFA may store the attribute information in its internal visitor list of MNs.

Step 5-2: An MN (MN1) sends the data packets destined to another MN (MN2) to the FA/GFA.

When the MN1 and the MN2 are attached to one FA, and the MN1 supports reverse tunneling, the MN1 first sends the data packets destined to the MN2 to the FA.

When the MN1 and the MN2 are attached to one GFA, and the MN1 supports reverse tunneling, the MN1 first sends the data packets destined to the MN2 to the FA of the MN1. The FA encapsulates the received data packets into tunnel data packets and sends the encapsulated data packets to the GFA.

Step 5-3: The FA/GFA forwards the data packets to the destination MN attached to the FA/GFA directly.

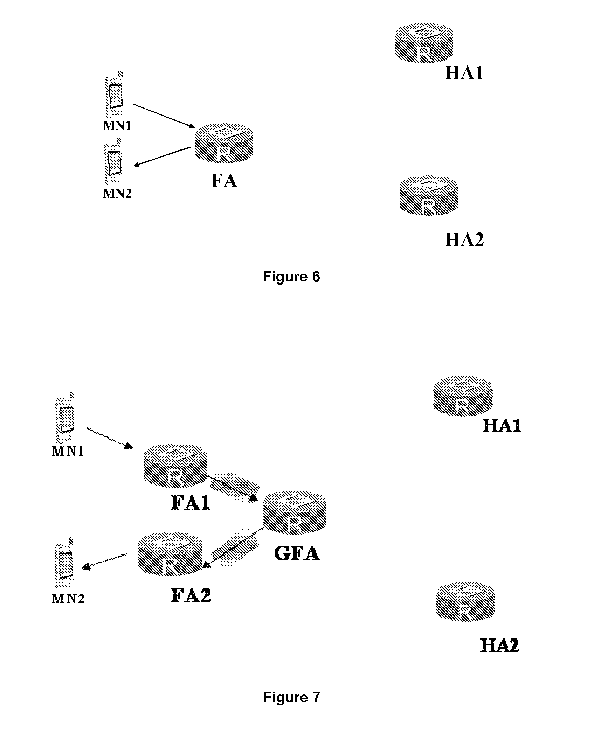

If an FA hierarchy is not adopted, upon reception of the data packets sent by MN1, the FA queries its internal visitor list according to the source IP address of the data packets and determines whether the MN1 has been assigned a reverse tunnel. If the MN1 has been assigned a reverse tunnel, the FA queries the internal visitor list according to the destination IP address of the data packets and determines whether the destination MN is locally attached. If the destination MN is locally attached, the FA queries its routing table or visitor list to obtain the routing information of the destination MN (MN2) and routes the data packets to the MN2. If the MN indicated by the destination IP address is not locally attached, or if the source MN does not have a reverse tunnel, the normal handling procedure is followed. This procedure for routing data packets is shown in Figure 6.

If an FA hierarchy is adopted, when an MN1 and an MN2 are attached to the same FA, the routing procedure may be the same as that when the FA hierarchy is not adopted. Otherwise, an FA1 encapsulates the data packets received from the MN1 into tunnel data packets and forwards them to the GFA; the GFA decapsulates the tunnel data packets sent by the FA1 via a tunnel to data packets, obtains the source MN (the MN1) attribute information by querying its internal visitor list according to the source IP address of the data packets, and determines whether the MN has been assigned a reverse tunnel. If the MN has been assigned a reverse tunnel, the GFA queries its internal visitor list according to the destination IP address of the data packets and determines whether the MN indicated by the destination IP address is locally attached. If the MN indicated by the destination IP address is locally attached, the GFA obtains the routing information of the MN2 by querying its routing table or visitor list and encapsulates the data packets to tunnel data packets, and sends the tunnel data packets to an FA2. The FA2 decapsulates the received tunnel data packets and forwards the data packets to the MN2. If the MN indicated by the destination IP address is not locally attached or if the source MN attribute indicates that MN1 has not been assigned a reverse tunnel, the data packets are routed in a normal procedure. This procedure for routing data packets is shown in Figure 7.

If an FA hierarchy is adopted, when an MN1 and an MN2 are attached to the same FA, the routing procedure may also differ from that when an FA hierarchy is not adopted. In this case, the FA only encapsulates, decapsulates, and forwards the received data packets. The GFA determines whether the source MN has been assigned a reverse tunnel and whether the destination MN is locally attached, and forwards to the locally attached destination MN the data packets sent by the source MN that has been assigned a reverse tunnel.

The mobile IP network is an IPv4 or IPv6 network.

Although the invention has been described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for optimizing communication between MNs in a mobile IP network, comprising:
A: sending, by an MN in the mobile IP network, data packets destined to another MN to its foreign agent device; and
B: by the foreign agent device, receiving the data packets, determining that the destination MN is attached to the foreign agent device, and routing the packets directly to the destination MN.

2. The method of claim 1, wherein the MN registers with an foreign agent device and the foreign agent device stores the attribute information of the MN.

3. The method of claim 2, wherein the MN attribute information is stored in the internal visitor list of the FA.

4. The method of claim 2, wherein the MN attribute information comprises whether the MN has been assigned a reverse tunnel or further comprises the IP address of the MN.

5. The method of claim 4, wherein, in step B, the foreign agent device receives the data packets, determines that the sending MN has been assigned a reverse tunnel according to the MN attribute information stored in the foreign agent device, and goes on to determine that the destination MN is attached to the foreign agent device.

6. The method of claim 1, wherein the foreign agent device queries its routing table or visitor list to determine that the destination MN is attached to the foreign agent device.

7. The method of any of claims 1-6, wherein the foreign agent device is an FA or a GFA.

8. The method of claim 1, wherein the foreign agent device in step A is an FA and step B comprises:
B1: by the FA, querying the MN attribute information it stores, determining that the source MN has a reverse tunnel according to the source IP address of the received data packets, determining whether the destination MN is locally attached and if the destination MN is locally attached, proceeding with step B2;if the destination MN is not locally attached, proceeding with step B3;
B2: routing, by the FA, the data packets to the destination MN attached to the FA; and
B3: routing, by the FA, the data packets to a GFA, and by the GFA, sending the data packets to the destination MN attached to the GFA after determining that the destination MN is locally attached.

9. The method of claim 8, wherein step B3 comprises:
B31: by the FA, encapsulating the received packets into tunnel data packets and sending the tunnel data packets to the GFA, and by the GFA, decapsulating the tunnel data packets to data packets;
B32: by the GFA, querying the MN attribute information the GFA stores, determining that the source MN has a reverse tunnel according to the source IP address of the decapsulated data packets, determining that the destination MN is locally attached, and proceeding with step B33; and
B33: by the GFA, querying its routing table, encapsulating the extracted data packets into tunnel data packets, and sending the tunnel data packets to the FA of the destination MN attached to the GFA; by the FA, decapsulating the received tunnel data packets to data packets and sending the data packets to the destination MN.

10. The method of claim 1, wherein the mobile IP network is an IPv4 or IPv6 network.
